# EUROPÄISCHE PATENTSCHRIFT

(11) **EP 2 180 930 B1**
(45) Veröffentlichungstag und Bekanntmachung des Hinweises auf die Patenterteilung: **23.01.2013**
(21) Anmeldenummer: 08716825.8
(22) Anmeldetag: 13.02.2008
(51) Int. Cl.: C02F 1/00

(54) **VORRICHTUNG ZUR BEHANDLUNG VON WASSER, INSBESONDERE FILTERVORRICHTUNG, UND KARTUSCHE**
DEVICE FOR TREATING WATER, PARTICULARLY A FILTRATION DEVICE, AND CARTRIDGE
DISPOSITIF POUR LE TRAITEMENT DE L'EAU, EN PARTICULIER DISPOSITIF DE FILTRATION ET CARTOUCHE

(30) Priorität: 13.02.2007 DE 102007006970
(43) Veröffentlichungstag der Anmeldung: 05.05.2010
(60) Teilanmeldung: 12181102.0
(73) Patentinhaber: Brita GmbH, 65232 Taunusstein (DE)
(72) Erfinder: NAMUR, Marc, 64297 Darmstadt (DE)
(74) Vertreter: Mehler Achler
(86) Internationale Anmeldenummer: PCT/EP2008/051721
(87) Internationale Veröffentlichungsnummer: WO 2008/098952

(56) Entgegenhaltungen:
- WO-A-2006/050114
- US-A1- 2003 217 958
- US-A1- 2004 211 931

## Beschreibung

Die Erfindung betrifft eine Vorrichtung zur Behandlung von Wasser, insbesondere eine Filtervorrichtung, mit einer Kartusche, die einen Behälter zur Aufnahme von Behandlungsmittel für Wasser, insbesondere zur Aufnahme von Filtermittel, und einen auf dem Behälter angeordneten Anschlusskopf aufweist, der mindestens eine Eintrittsöffnung und mindestens eine Austrittsöffnung aufweist, und mit einem Anschlusselement, das eine Aufnahme für den Anschlusskopf mit mindestens einer Zuflussöffnung und mindestens einer Abflussöffnung aufweist, die an die Eintritts- und Austrittsöffnungen des Anschlusskopfes mittels Dichtelementen abgedichtet angeschlossen sind gemäß dem Oberbegriff von Anspruch 1. Die Erfindung bezieht sich auch auf eine Kartusche, insbesondere auf eine Filterkartusche.

Unter der Behandlung von Wasser wird außer der Filtration auch die dosierte Abgabe von Stoffen an das Wasser verstanden. Die Abgabe von Stoffen kann auch mit einer Filtration des Wassers kombiniert sein.

Unter Filterkartuschen werden zum einen solche verstanden, die ein siebartiges Gebilde zur mechanischen Filtration aufweisen. Zum anderen werden unter Filterkartuschen auch solche verstanden, die außer einem siebartigen Gebilde mindestens ein Filtermedium, z. B. in Granulatform, enthalten, das zur chemischen und/oder mechanischen Entfernung und/oder Verminderung von organischen und/oder anorganischen Verunreinigungen dient. Derart ausgestattete Filterkartuschen ermöglichen somit eine nicht-mechanische Filtration, die mit einer mechanischen Filtration kombiniert sein kann. Diese Filterkartuschen werden zur Optimierung von Wasser eingesetzt, wobei unter Optimierung die mechanische und/oder nicht-mechanische Filtration verstanden wird. Hierzu zählt z. B. die Enthärtung und Entkalkung von Trinkwasser.

Die Filtration kann druckgetrieben, d. h. mit Überdruck oder mit Unterdruck, oder schwerkraftgetrieben durchgeführt werden.

Aus der WO 01/64312 sind verschiedene Ausführungsformen von Filterkartuschen bekannt, die im wesentlichen einen Behälter mit Filtermittel sowie Anschlussköpfe am Boden und am Deckel aufweisen. Bei einer ersten Ausführung sind zylindrische Anschlüsse vorgesehen, die in axialer Richtung in entsprechend ausgebildete Anschlusselemente eingesteckt werden. Eintritts- und Austrittskanäle erstrecken sich in axialer und damit in Steckrichtung.

Eine zweite Ausführung zeigt abgewinkelte Anschlüsse, die es erlauben, die Filterkartusche senkrecht zu ihrer Längsachse auf ein entsprechend ausgebildetes Anschlusselement aufzustecken.

Eine dritte Ausführung weist einen unteren Kugelgelenkkopf und einen oberen Anschlusskopf auf, der abgewinkelt ausgeführt ist, so dass er in Richtung senkrecht zur Längsachse in das Anschlusselement einsteckbar ist. Durch Verschwenken der Filterkartusche um den Kugelgelenkkopf werden die Filterkartusche und das Anschlusselement zusammengeführt. Der Austrittskanal erstreckt sich ebenfalls in Steckrichtung. Eine Abwandlung des oberen Anschlusskopfes sieht einen Austrittskanal vor, der sich in Längsrichtung der Filterkartusche erstreckt.

Allen Ausführungen sind zwei Anschlussköpfe gemeinsam, so dass auch jeweils zwei Steck- oder Verbindungsvorgänge beim Austausch der Filterkartusche erforderlich sind, um die Filterkartusche ordnungsgemäß anzuschließen. Die Kugelgelenkköpfe sind zudem aufwendig und weisen Dichtprobleme auf, da der Kugelgelenkkopf auch den Eintrittskanal aufnimmt und die Dichtelemente bei der Schwenkbewegung der Filterkartusche unter Umständen beschädigt werden können.

Die US 2006/0032202 beschreibt eine Filtervorrichtung mit mehreren nebeneinander angeordneten Filterkartuschen, die jeweils am oberen Ende einen einzigen Anschlusskopf aufweisen. Der Anschlusskopf enthält sowohl den Eintritts- als auch den Austrittskanal. Die Filterkartusche wird mit ihrem unteren Ende in eine Schwenkhalterung eingesetzt und anschließend beigeschwenkt, wobei der Anschlusskopf mit dem Anschlusselement verbunden wird.

Weiterhin sind Filterkartuschen mit zylindrischem Anschlusskopf bekannt, die mittels einer Drehbewegung in das Anschlusselement eingeschraubt werden.

Aus der US 5,653,871 ist eine solche Filtervorrichtung bekannt, wobei der Einlass- und der Auslasskanal gegenüberliegend im zylindrischen Anschlusskopf angeordnet sind. Die Abdichtung erfolgt über O-Ringe, die in eine sich über den Umfang der Zylinderfläche eingebrachte Nut eingesetzt sind. Bei Anschlussköpfen, die z. B. nach dem Spritzgussverfahren hergestellt werden, verlaufen die werkzeugbedingten Trennfugen durch diese Nut, was Undichtigkeiten begünstigt. Da die zylindrische Aufnahme des Anschlusselementes mit ihrem Innenquerschnitt auf den Außenquerschnitt des zylindrischen Anschlusskopfes der Filterkartusche abgestimmt ist und durch die O-Ringe eine Abdichtung gewährleistet werden muss, sind erhebliche Reibungskräfte beim Einsetzen der Filterkartusche erforderlich. Außerdem können die Dichtelemente einem Verschleiß unterliegen.

Dieselben Probleme treten auch bei der Vorrichtung der US 2004/0211931 A1 auf. Der Anschlusskopf der Filterkartusche besteht aus zwei Abschnitten, nämlich einem zylindrischen Abschnitt, der mindestens eine O-Ring-Dichtung trägt und einem teilzylindrischen Abschnitt, an dem eine abgeschrägte Fläche mit Austrittsöffnungen angeordnet ist. Die abgeschrägte Fläche dient als Nockenfläche zur Betätigung eines im Anschlusselement angeordneten Ventils.

Es ist Aufgabe der Erfindung, eine Vorrichtung zur Behandlung von Wasser mit einer Kartusche bereitzustellen, die auf einfache Weise ausgetauscht werden kann, wobei gleichzeitig die erforderliche Dichtigkeit im Anschlussbereich von Kartusche und Anschlusselement gewährleistet sein soll.

Diese Aufgabe wird mit einer Vorrichtung zur Behandlung von Wasser nach Anspruch 1 gelöst.

Unter dem axialen Einstecken des Anschlusskopfes wird eine Bewegung der Kartusche in Richtung der Längsachse der Kartusche - vorzugsweise ohne zusätzliche Drehbewegung - verstanden.

Die Verjüngung des Anschlusskopfes hat den Vorteil, dass das axiale Einstecken des Anschlusskopfes weitgehend kräftefrei erfolgt, weil sich die Außenfläche des Anschlusskopfes und die Innenfläche der Aufnahme zunächst nicht berühren. Soweit Dichtelemente vorgesehen sind und gegenüber der Außenfläche bzw. Innenfläche vorstehen, kontaktieren die Dichtelemente die ihnen gegenüberliegenden Flächen erst in der Endphase des Einsteckvorgangs. Lediglich auf einem kurzen Restweg werden die Dichtelemente auf Reibung und Kompression beansprucht, so dass bei einem Kartuschenwechsel die Dichtelemente nahezu keinem Verschleiß unterliegen.

Aufgrund der gegenüberliegenden Außenflächenabschnitte und der dazu komplementären Innenflächenabschnitte der Aufnahme wird auf dem Restweg der erforderliche Druck auf die Dichtelemente ausgeübt, so dass die gewünschte Dichtigkeit im Bereich der Öffnungen gewährleistet wird.

Beim Lösen der Kartusche ist nur zu Beginn eine axiale Kraft notwendig, so dass insgesamt bei einem Kartuschenwechsel nur ein geringer Kraftaufwand erforderlich ist.

Ein weiterer Vorteil besteht darin, dass im Betrieb der Vorrichtung die Flüssigkeit je nach Grad der Neigung oder Krümmung der ersten und/oder zweiten Außenflächenabschnitte bzw. der komplementär dazu ausgebildeten ersten und zweiten Innenflächenabschnitte der Aufnahme mehr oder weniger senkrecht zur Längsachse der Kartusche ein- und ausströmt. Dadurch wird eine Kraftkomponente senkrecht zur Längsachse der Kartusche erzeugt, die den Anschlusskopf innerhalb der Aufnahme fixiert. Vorzugsweise sind die Abschnitte der Kanäle, die in die betreffenden Eintritts- und Austrittsöffnungen des Anschlusskopfes und des Anschlusselements münden, senkrecht oder schräg zur Längsachse ausgerichtet.

Vorzugsweise ist der Anschlusskopf asymmetrisch ausgebildet. Durch die asymmetrische Ausgestaltung des Anschlusskopfes ist auch die Aufnahme entsprechend asymmetrisch gestaltet. Dadurch wird sichergestellt, dass es nur eine einzige Einbaulage gibt, in der die Eintritts- und Austrittsöffnungen bzw. die Zulauf- und Auslauföffnungen der Aufnahme gegenüber liegen. Eine Falschpositionierung der Kartusche wird dadurch ausgeschlossen.

Vorzugsweise ist der erste Außenflächenabschnitt eine ebene Fläche, die gegenüber der Längsachse der Kartusche um einen Winkel α mit 0 < α < 90° geneigt ist. Vorzugsweise liegt der Winkel α unter 20°, besonders bevorzugt im Bereich zwischen 1 ° und 5° und insbesondere bei 2,5° bis 3,5°. Eine ebene Fläche bildet eine Gleitschräge, die das Einstecken der Kartusche erleichtert. Hierbei hat sich insbesondere ein Winkel von 1 ° bis 5° als besonders vorteilhaft herausgestellt, weil eine Selbsthemmung der vorzugsweise aus Kunststoff bestehenden Komponenten vermieden wird, die insbesondere das Lösen der Kartusche behindern würde.

Als Alternative zu einer schrägen Fläche kann der erste Außenflächenabschnitt gekrümmt ausgeführt sein, wobei eine Kegel- oder Kugelfläche oder ein Abschnitt einer Kegel- oder Kugelfläche bevorzugt ist. Anstelle von geometrisch beschreibbaren Flächen sind auch so genannte gekrümmte Freiformflächen möglich. Es ist möglich, den gesamten Anschlusskopf als Kegel, Kegelstumpf oder als Kugelkappe oder Halbkugel oder als Freiformfläche auszugestalten.

Sämtliche die Verjüngung des Anschlusskopfes bewirkenden ersten Außenflächenabschnitte können mit zweiten Außenflächenabschnitten kombiniert werden, die z. B. ebenfalls als ebene oder gekrümmte Flächen ausgebildet sind.

Wenn der zweite Außenflächenabschnitt ebenfalls eine ebene Fläche ist, so kann diese auch parallel zur Längsachse der Kartusche ausgerichtet sein, was β gleich 0 entspricht. Die ebene Fläche kann ebenso wie der erste Außenflächenabschnitt zur Längsachse der Kartusche geneigt sein, wodurch der Anschlusskopf eine dachartige Außenkontur erhält. Die Winkel α und β können hierbei gleich groß sein. Um eine eindeutige Einbaulage zu definieren, ist vorzugsweise α≠β.

Gemäß einer weiteren Ausführungsform kann der zweite Außenflächenabschnitt gekrümmt sein. Im Hinblick auf eine eindeutige Einbaulage sind vorzugsweise die Krümmungen des ersten Außenflächenabschnitts und des zweiten Außenflächenabschnitts ungleich.

Die Eintritts- und Austriftsöffnungen und/oder die Zufluss- und Abflussöffnungen sind jeweils von mindestens einem Dichtelement umgeben. Als Dichtelemente kommen vorzugsweise O-Ringe oder Flachdichtungen in Frage. Das Dichtelement ist beispielsweise in eine Nut eingelegt, die die betreffende Öffnung umgibt. Die Nut befindet sich in dem ersten und/oder zweiten Außenflächenabschnitt bzw. in den komplementären Innenflächenabschnitten der Aufnahme, was den Vorteil mit sich bringt, dass insbesondere bei der Herstellung der Bauteile nach dem Spritzgussverfahren im Bereich der Nut werkzeugbedingte Trennfugen vermieden werden können.

Mindestens eine Außenfläche des Anschlusskopfes kann Ausnehmungen aufweisen. Die Ausnehmungen können beliebige Formen aufweisen und dienen dazu, die Herstellung des Anschlusskopfes zu vereinfachen. Vorzugsweise weisen auch die ersten und zweiten Außenflächenabschnitte solche Ausnehmungen auf. Die bedeutet, dass die Größe der Außenflächenabschnitte und damit die Reibung beim Zusammenstecken von Anschlusskopf und Anschlusselement reduziert werden.

Vorzugsweise ist der kleinste Innenquerschnitt der Aufnahme kleiner als der kleinste Außenquerschnitt des Anschlusskopfes. Diese Ausführungsform gestattet bei eventuell auftretenden Abnutzungen an den Dichtelementen und/oder den betreffenden Flächenabschnitten ein geringfügig tieferes Einschieben des Anschlusskopfes in die Aufnahme, um die gewünschte Dichtigkeit im Bereich der Öffnungen sicherzustellen.

Für den Fall, dass durch die Ausgestaltung der ersten und zweiten Außenflächenabschnitte keine eindeutige Einbaulage definiert werden kann, z. B. bei symmetrischer Ausgestaltung des Anschlusskopfes, kann es von Vorteil sein, dass der Anschfusskopf mindestens ein Führungsmittel aufweist, das mit einem Führungsmittel der Aufnahme zusammenwirkt. Dies können beispielsweise Nuten und/oder Stege sein, die beim Zusammenstecken von Anschlusskopf und Aufnahme entsprechend zusammenwirken und die Einbaulage eindeutig definieren.

Zur Fixierung der eingesteckten Kartusche ist es von Vorteil, wenn ein Verriegelungselement vorgesehen ist, wobei vorzugsweise das Anschlusselement das Verriegelungselement aufweist, das an der Kartusche angereift. Als ein solches Verriegelungselement kann ein Überwurfring verwendet werden. Hierbei ist es vorteilhaft, wenn der Überwurfring als Bajonettring ausgebildet ist. Der Bajonettring bildet zusammen mit entsprechenden Verriegelungselementen einen Bajonettverschluss, der vorzugsweise derart ausgebildet ist, dass bei der Verriegelung keine axialen Kräfte wirksam werden, die den eingesteckten Anschlusskopf in der Aufnahme zusätzlich verschieben. Gemäß einer weiteren Ausführungsform kann vorgesehen sein, dass der Verschluss, insbesondere der Bajonettverschluss, die Filterkartusche um eine vorgegebene Wegstrecke in die Aufnahme des Anschlusselements einschiebt, damit auf die Dichtelemente ein definierter Druck ausgeübt wird. Es ist auch denkbar, das Verriegelungselement, wie z. B. den Überwurfring, an der Kartusche vorzusehen.

Vorzugsweise bestehen mindestens der Anschlusskopf und/oder die Aufnahme aus einem Kunststoffmaterial, wobei gemäß einer besonderen Ausführungsform diese Komponenten spritzgegossen sind.

Vorzugsweise weist das Anschlusselement einen Auswerfer auf. Ein Auswerfer unterstützt das Lösen des Anschlusskopfes in der Aufnahme, was beispielsweise dann von Vorteil sein kann, wenn die Aufnahme zu allen Flächen des Anschlusskopfes komplementäre Innenflächen besitzt, so dass unter Umständen die Kartusche zu fest innerhalb der Aufnahme sitzen kann.

Die Kartusche ist dadurch gekennzeichnet, dass sich der Anschlusskopf zu seinem freien Ende hin verjüngt, wobei die Außenfläche mindestens einen zur Längsachse der Kartusche geneigten oder gekrümmten ersten Außenflächenabschnitt und einen dem ersten Außenflächenabschnitt gegenüberliegenden zweiten Außenflächenabschnitt aufweist und dass die Eintritts- und Austrittsöffnungen in dem ersten und/oder dem zweiten Außenflächenabschnitt liegen.

Vorteilhafte Ausgestaltungen sind Gegenstand der Unteransprüche, die im Zusammenhang mit der Vorrichtung bereits erläutert worden sind. Beispielhafte Ausführungsformen der Erfindung werden nachfolgend anhand der Zeichnungen näher erläutert. Es zeigen:
- Figur 1: eine perspektivische Darstellung einer Vorrichtung mit Kartusche und Anschlusselement,
- Figur 2: einen Schnitt durch die in Figur 1 gezeigte Vorrichtung während des Einsetzens der Kartusche,
- Figur 3: einen Schnitt durch die Vorrichtung gemäß Figur 1 mit eingesetzter Kartusche,
- Figur 4a, b: perspektivische Darstellungen des Anschlusskopfes und des oberen Teils des Kartuschenbechers einer Kartusche,
- Figur 5: einen Vertikalschnitt durch den Anschlusskopf der in den Figuren 4a, b gezeigten Kartusche,
- Figur 6: eine Seitenansicht eines Anschlusskopfes gemäß einer weiteren Ausführungsform,
- Figuren 7 bis 12: perspektivische Darstellungen von Anschlussköpfen gemäß weiterer Ausführungsformen,
- Fig. 13: einen Schnitt durch Anschlusskopf und Anschlusselement gemäß einer weiteren Ausführungsform und
- Fig. 14: eine perspektivische Darstellung eines Anschlusselements mit Auswerfer.

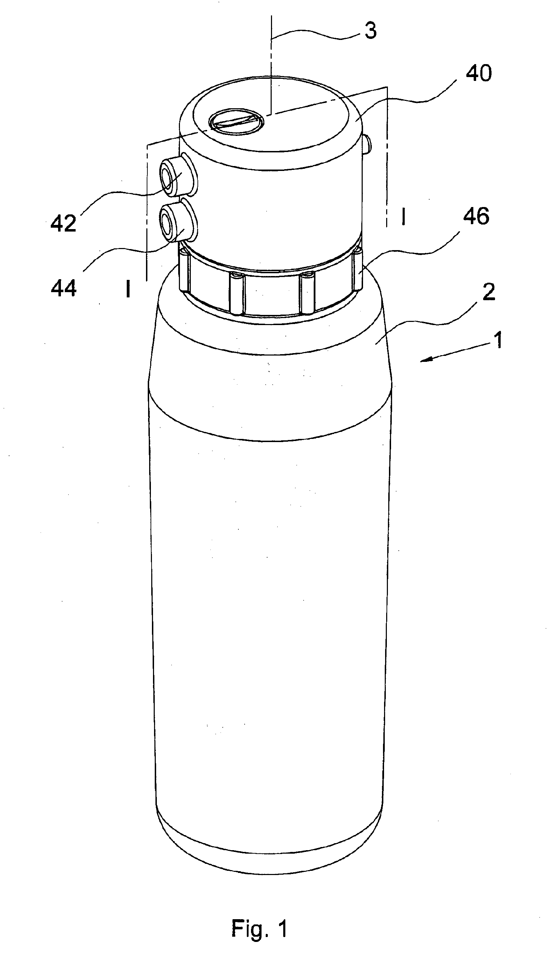

In der Figur 1 ist eine perspektivische Darstellung einer Vorrichtung zur Behandlung von Wasser dargestellt, die eine Kartusche 1 mit einem Behälter 2 und ein Anschlusselement 40 umfasst. Das Anschlusselement 40 ist kappenartig ausgebildet und besitzt am unteren Rand einen Überwurfring 46, mit dem das Anschlusselement 40 an der Kartusche 1 fixiert wird.

Seitlich am Anschlusselement 40 sind ein Einlaufstutzen 42 und ein Auslaufstutzen 44 angeformt. Die beiden Stutzen 42, 44 erstrecken sich senkrecht zur Längsachse 3 der Kartusche 1 und sind in der hier gezeigten Ausführungsform nebeneinander angeordnet.

Der Behälter 2 der Kartusche 1 ist je nach Anwendungszweck mit einem geeigneten Behandlungsmittel gefüllt. Hierbei kann es sich um ein Filtermittel und/oder auch um ein Mittel handeln, das Stoffe an die zu behandelnde Flüssigkeit abgibt. Die dargestellte Vorrichtung wird vorzugsweise als druckbetriebene Vorrichtung eingesetzt, um insbesondere Trinkwasser aufzubereiten.

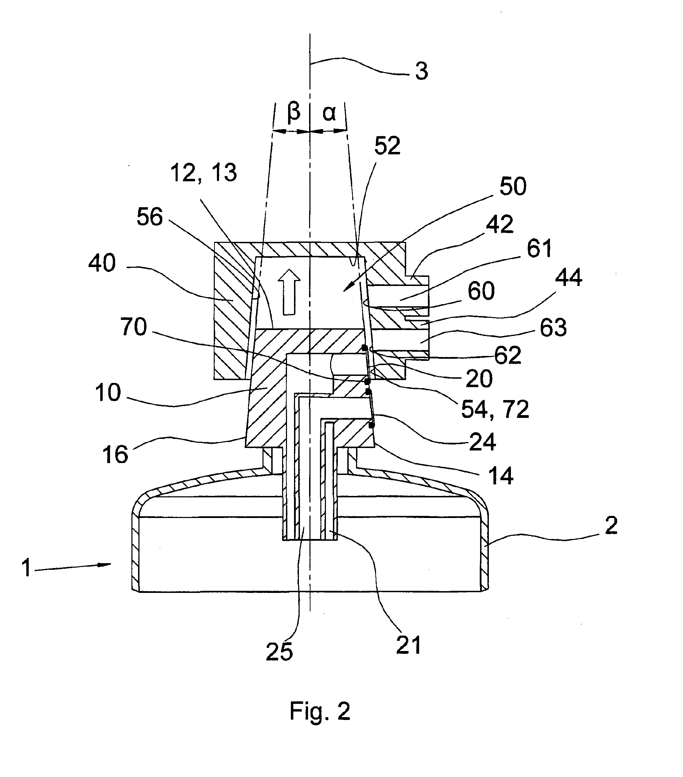

In der Figur 2 ist ein Vertikalschnitt längs der Linie I-I durch den oberen Bereich der Vorrichtung gemäß Figur 1 dargestellt. Die Figur 2 zeigt den Einsetzvorgang des Anschlusskopfes 10 der Kartusche 1 in das Aufnahmeelement 40.

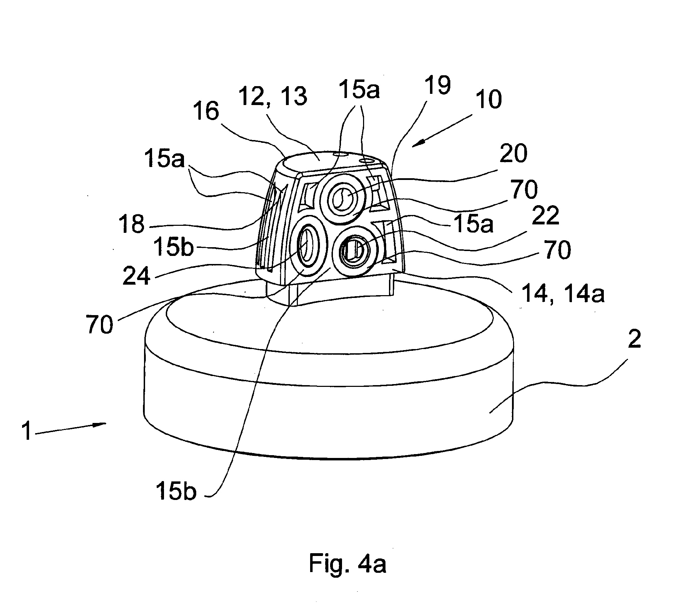

Die Kartusche 1 besitzt auf dem Behälter 2 den Anschlusskopf 10 dessen Querschnitt sich mit zunehmendem Abstand vom Behälter 2, d. h. in Richtung freies Ende 13, verjüngt. Der Figur 2 ist zu entnehmen, dass der Anschlusskopf 10 einen ersten Außenflächenabschnitt 14 und gegenüberliegend einen zweiten Außenflächenabschnitt 16 aufweist. Ferner besitzt der Anschlusskopf 10 eine Stirnfläche 12 sowie nicht dargestellte Seitenflächen. Einzelheiten der Flächenausbildung des Anschlusskopfes 10 werden im Zusammenhang mit den verschiedenen Ausführungsformen gemäß den Figuren 4a bis 12 erläutert.

In der in Figur 2 gezeigten Ausführungsform bilden die beiden Außenflächenabschnitte 14 und 16 jeweils ebene Flächen, die gegenüber der Längsachse 3 der Kartusche 1 um die Winkel α und β geneigt angeordnet sind, wodurch die Verjüngung des Anschlusskopfes 10 erreicht wird. Der Anschlusskopf 10 ist symmetrisch ausgebildet, d. h. *α* = *β.*

Innerhalb des Anschlusskopfes 10 sind ein Eintrittskanal 21 und ein Austrittskanal 25 angeordnet, die beide mit ihren senkrecht zur Längsachse 3 ausgerichteten Abschnitten im ersten Außenflächenabschnitt 14 münden. Die Eintrittsöffnung 20 und die Austrittsöffnung 24 liegen in der Ebene dieses Außenflächenabschnitts 14. Die Öffnungen 20, 24 sind jeweils von einem Dichtelement 70 in Form eines O-Ringes umgeben. Die O-Ringe sind in entsprechenden Nuten in dem Außenflächenabschnitt 14 eingelegt und stehen geringfügig gegenüber dem Außenflächenabschnitt 14 vor.

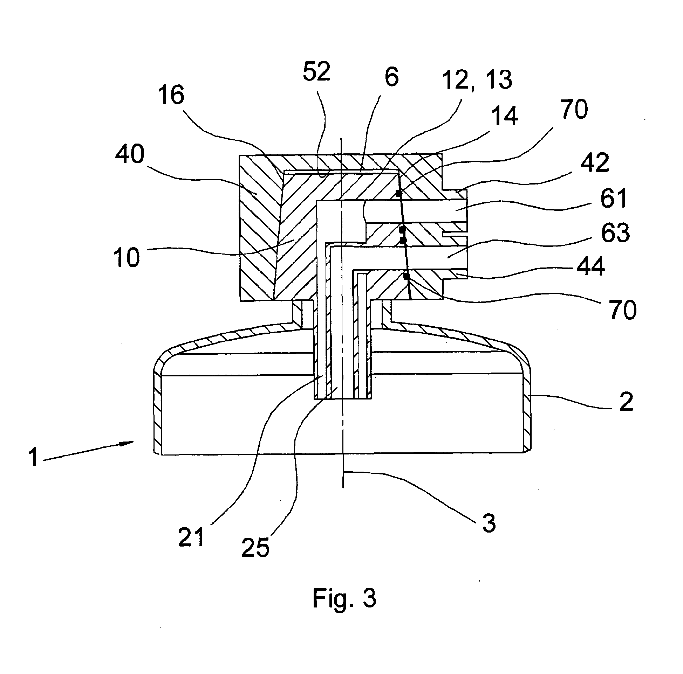

Das Anschlusselement 40 ist kappenartig ausgebildet und besitzt im Innern eine Aufnahme 50, die zu den Außenflächenabschnitten 14 und 16 des Anschlusskopfes 10 komplementäre Innenflächenabschnitte 54, 56 aufweist, deren Neigung der Neigung der beiden Außenflächenabschnitte 14, 16 des Anschlusskopfes 10 entspricht. Ferner besitzt das Anschlusselement 40 ebenfalls eine Stirnfläche 52 und einen Zuflusskanal 61 mit Zuflussöffnung 60 sowie einen Abflusskanal 63 mit Abflussöffnung 62. Die Öffnungen 60, 62 liegen in dem ersten Innenflächenabschnitt 54, der gleichzeitig als Dichtfläche 72 dient, an der die Dichtelemente 70 bei vollständig eingeschobenem Anschlusskopf 10 anliegen, wie dies in der Figur 3 dargestellt ist.

Während des Einführens des Anschlusskopfes 10 in die Aufnahme 50 sind die Flächenabschnitte 14, 16 und 54, 56 beabstandet. Es tritt somit keine durch die Dichtelemente 70 verursachte Reibung auf. Beim weiteren Einschieben nähern sich die Außenflächenabschnitte 14, 16 den Innenflächenabschnitten 54, 56, bis die Flächenabschnitte 14, 16, 54, 56 unter Zusammenpressen der Dichtelemente 70 aneinander liegen. In dieser Endposition liegen die Öffnungen 20 und 60 sowie 24 und 62 gegenüber, so dass Zufluss und Abfluss jeweils abdichtend miteinander verbunden sind (Figur 3).

Da der kleinste Innenquerschnitt der Aufnahme 50 des Anschlusselementes 40 kleiner ist als der kleinste Außenquerschnitt des Anschlusskopfes 10, d. h. im vorliegenden Fall ist die Stirnfläche 52 kleiner als die Stirnfläche 12, befindet sich zwischen den beiden Stirnflächen 12 und 52 bei vollständig eingeschobenem Anschlusskopf 10 ein Zwischenraum 6. Der Zwischenraum 6 erlaubt bei Bedarf ein tieferes Einschieben des Anschlusskopfes 10 in die Aufnahme 50 unter stärkerer Verpressung der Dichtelemente oder bei erfolgter Abnutzung der Dichtelemente.

In der Figur 4a ist eine perspektivische Darstellung einer Kartusche 1 dargestellt. Auf dem Behälter 2 ist der Anschlusskopf 10 angeordnet, der vier Seitenflächen und eine Stirnfläche 12 aufweist. Eine Seitenfläche wird durch den ersten Außenflächenabschnitt 14 gebildet, der drei Öffnungen aufweist. Es handelt sich um eine erste und eine zweite Wassereintrittsöffnung 20, 22, um zwei Teilströme in das Innere der Kartusche einzuleiten. Zwei Eintrittsöffnungen 20, 22 werden benötigt, wenn im Aufnahmeelement 40 oder vor dem Aufnahmeelement 40 eine Verschneideeinrichtung (nicht dargestellt) angeordnet ist. Die eingeleiteten Teilströme werden innerhalb der Filterkartusche unterschiedlichen Behandlungen unterworfen und anschließend zusammengeführt.

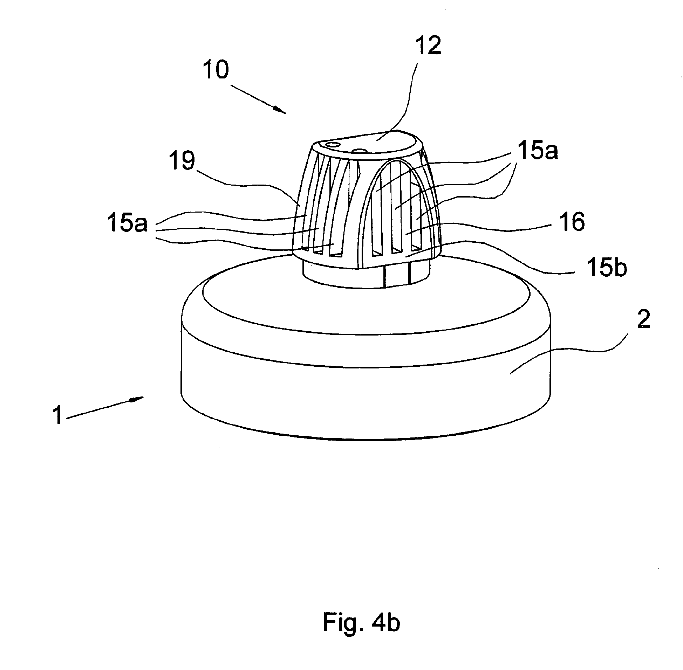

Das behandelte Wasser wird über die Wasseraustrittsöffnung 24 aus der Kartusche 1 abgeleitet. Die beiden Eintrittsöffnungen 20, 22 sind im Wesentlichen übereinander angeordnet, während die Wasseraustrittsöffnung 24 seitlich versetzt neben den beiden Wassereintrittsöffnungen 20, 22 angeordnet ist. Auf der Rückseite des Anschlusskopfes 10 (s. Fig. 4b) befindet sich der zweite Außenflächenabschnitt 16. Zwischen den beiden Außenflächenabschnitten 14 und 16 sind gekrümmte Seitenflächen 18 und 19 angeordnet.

Sämtliche Flächen 14, 16, 18 19 weisen Ausnehmungen 15a auf. Die Ausnehmungen 15a in der Fläche 14 sind um die Öffnungen 20, 22 und 24 angeordnet. Der erste Außenflächenabschnitt 14 reduziert sich dadurch auf die Stege 15b zwischen den Ausnehmungen 15a und/oder den Öffnungen 20,22 und 24.

In den Flächen 16, 18 und 19 sind die Ausnehmungen 15a länglich ausgebildet und durch entsprechende längliche Stege 15b voneinander getrennt. Da sich die Stege und damit die für die Reibung relevanten Flächen insbesondere in dem zweiten Außenflächenabschnitt 16 in vertikaler Richtung erstrecken, wird die Reibung beim Zusammenstecken reduziert.

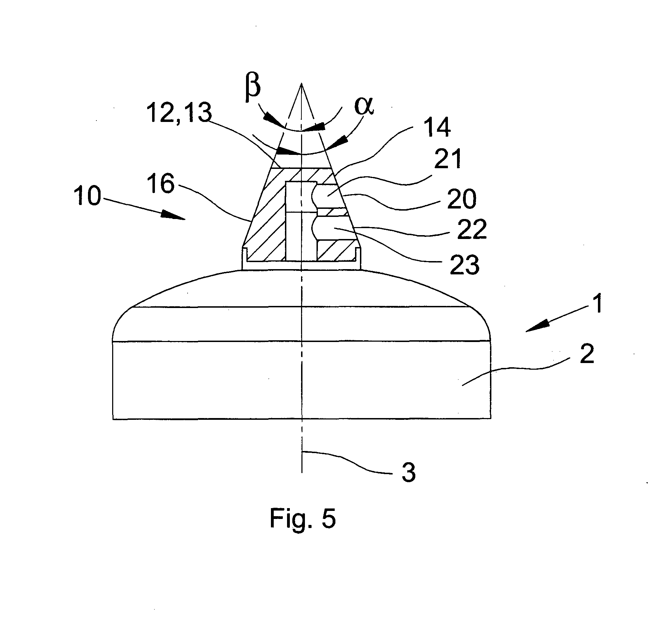

In der Figur 5 ist ein Vertikalschnitt durch den Anschlusskopf 10 der in den Figuren 4a, b gezeigten Kartusche dargestellt. Die Winkel α und β der ebenen Außenflächenabschnitte 14, 16 sind bezüglich der Längsachse 3 eingezeichnet. In der hier gezeigten Darstellung sind die Winkel α und β gleich groß gewählt.

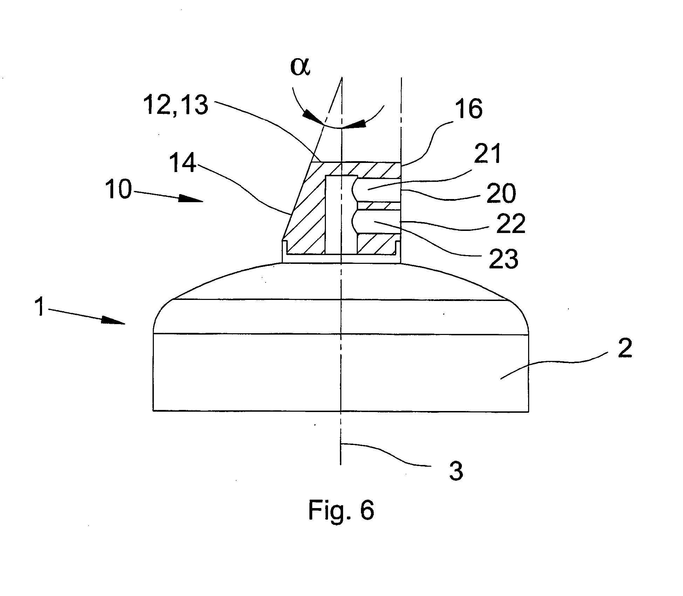

In der Figur 6 ist eine weitere Ausführungsform dargestellt, die sich dadurch unterscheidet, dass lediglich der erste Außenflächenabschnitt 14 eine schräge Fläche bildet, wobei der Winkel α ca. 10° beträgt. Der zweite Außenflächenabschnitt 16 weist keine Neigung auf, was bedeutet, dass der Winkel β in diesem Fall Null ist, d. h. der zweite Außenflächenabschnitt 16 ist parallel zur Längsachse 3 ausgerichtet. Beide Öffnungen 20, 24 befinden sich im zweiten Außenflächenabschnitt 16.

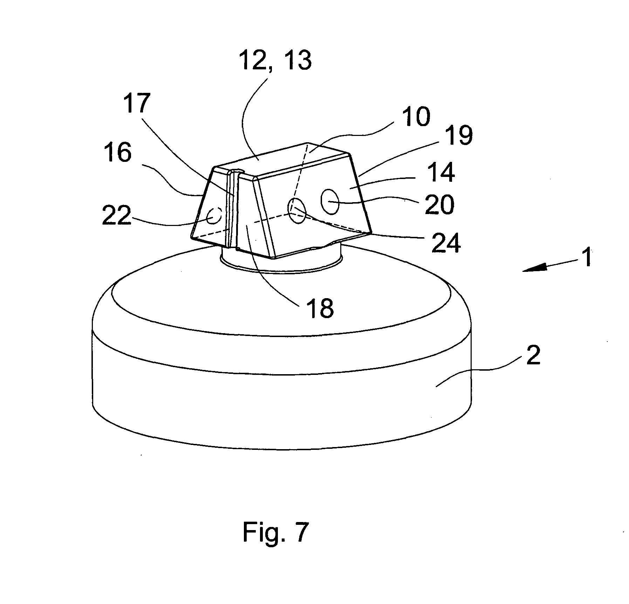

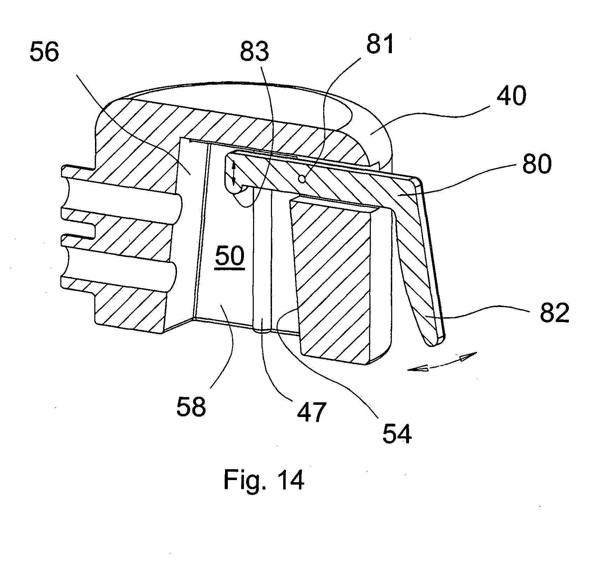

In der Figur 7 ist eine weitere Ausführungsform dargestellt, die sich von der Ausführungsform gemäß der Figuren 4a, b dadurch unterscheidet, dass ebene Seitenflächen 18 und 19 vorgesehen sind und die Eintrittsöffnung 20 sowie die Austrittsöffnung 24 in dem Außenflächenabschnitt 14 sowie eine zweite Eintrittsöffnung 22 in dem zweiten Außenflächenabschnitt 16 angeordnet sind. Eventuelle Dichtelemente sind nicht dargestellt. Es ist auch möglich, dass die Dichtelemente im Aufnahmeelement 40 angeordnet sind. Da der Anschlusskopf 10 symmetrisch ist, weist er zur Definition der Einbaulage in der Fläche 18 ein Führungsmittel 17 in Form einer vertikalen Nut auf, die mit einem entsprechenden Führungsmittel 47 des Anschlusselements 40 (s. Fig. 14) zusammenwirkt.

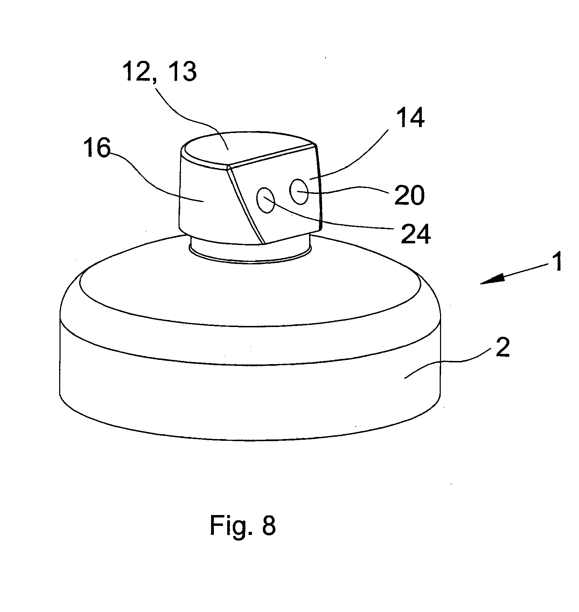

In der Figur 8 ist eine weitere Ausführungsform dargestellt, in der der Anschlusskopf 10 einen ersten ebenen Außenflächenabschnitt 14 mit den beiden Öffnungen 20 und 24 aufweist und ansonsten einen teilzylindrischen zweiten Außenflächenabschnitt 16 besitzt.

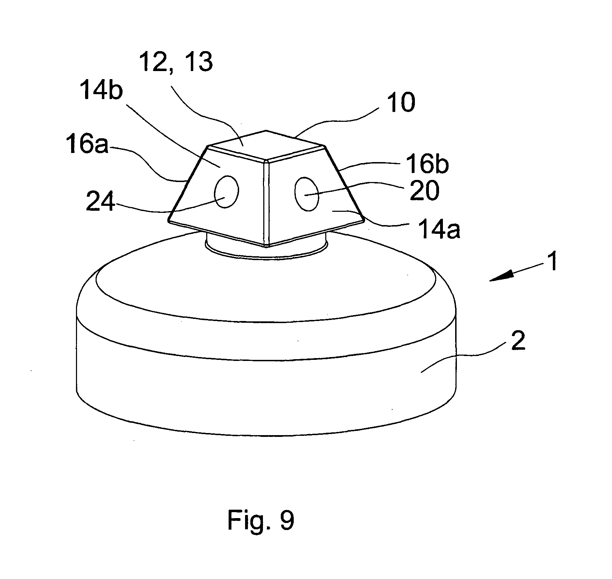

In der Figur 9 weist der Anschlusskopf 10 eine pyramidenförmige Gestalt auf, wobei die Wassereintrittsöffnung 20 in dem einen ersten Außenflächenabschnitt 14a, und die Wasseraustrittsöffnung 24 in dem anderen ersten Außenflächenabschnitt 14b vorgesehen sind.

Zu den beiden ersten Außenflächenabschnitten 14a,b sind jeweils gegenüberliegend zwei zweite Außenflächenabschnitte 16a,b vorgesehen. Die dazugehörige Aufnahme 50 besitzt vier komplementäre Innenflächenabschnitte 54a,b, 56a,b.

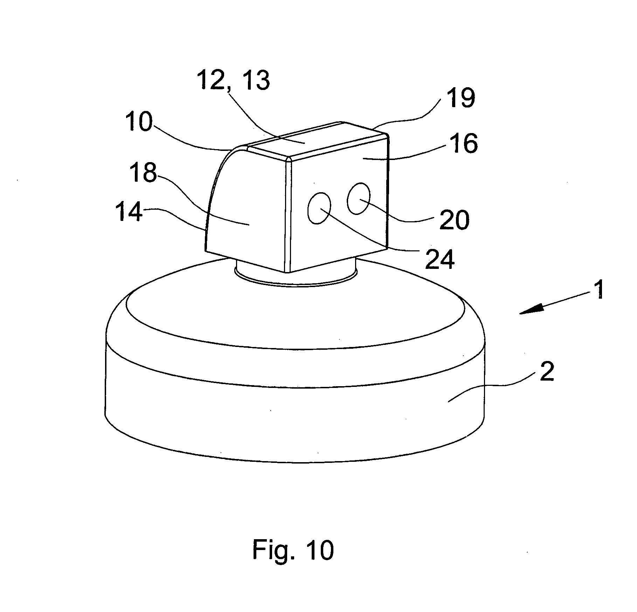

In der Figur 10 ist eine weitere Ausführungsform eines Anschlusskopfes 10 dargestellt, der einen ersten gekrümmten Außenflächenabschnitt 14 aufweist, wobei die Krümmung mit zunehmendem Abstand von dem Behälter 2 in Richtung des freien Endes 13 des Anschlusskopfes 10 zunimmt. Im Bereich des freien Endes 13 geht der erste Außenflächenabschnitt 14 in die ebene Stirnfläche 12 über.

Der zweite Außenflächenabschnitt 16 wird durch eine vertikale ebene Fläche gebildet. Zwischen den Außenflächenabschnitten 14 und 16 sind vertikale Seitenflächen 18 und 19 angeordnet. Die beiden Öffnungen 20 und 24 befinden sich in dem zweiten Außenflächenabschnitt 16.

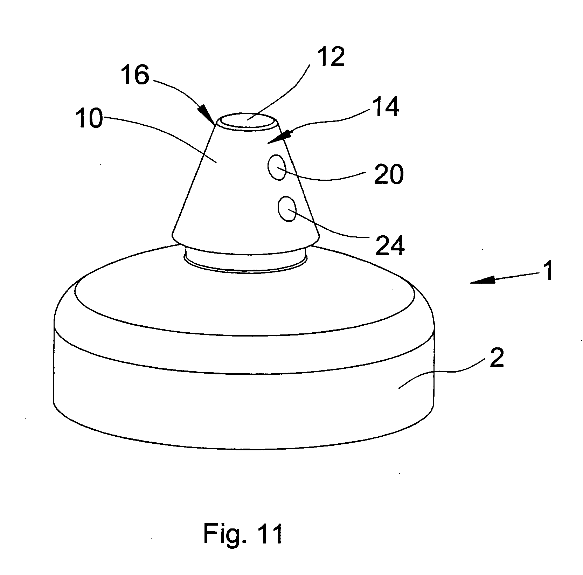

In der Figur 11 ist eine weitere Ausführungsform eines Anschlusskopfes 10 dargestellt. Der Anschlusskopf 10 besitzt eine kegelstumpfförmige Gestalt mit einer kegelförmigen Mantelfläche und einer ebenen Stirnfläche 12. In dieser Ausführungsform liegen die beiden Außenflächenabschnitte 14 und 16 sämtlich auf der Kegelfläche.

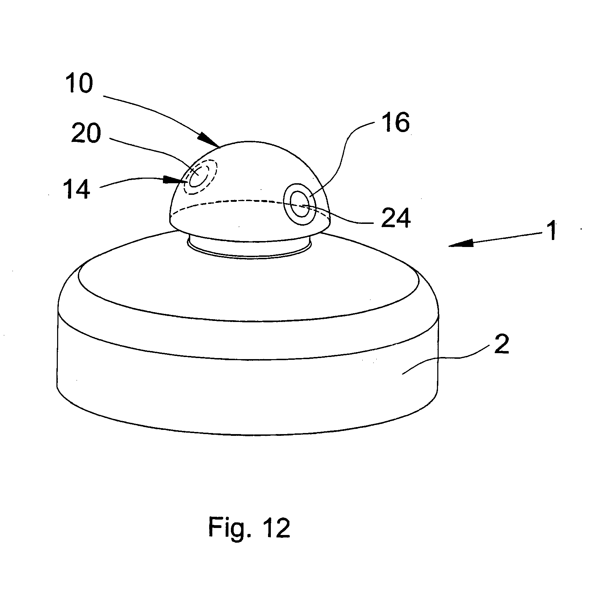

In der Figur 12 ist eine Ausführungsform dargestellt, bei der der Anschlusskopf 10 eine halbkugelförmige Außenfläche besitzt. Auch bei dieser Ausführungsform liegen die Außenflächenabschnitte 14 und 16, die eine ebene Ringfläche darstellen, auf der gemeinsamen Halbkugelfläche.

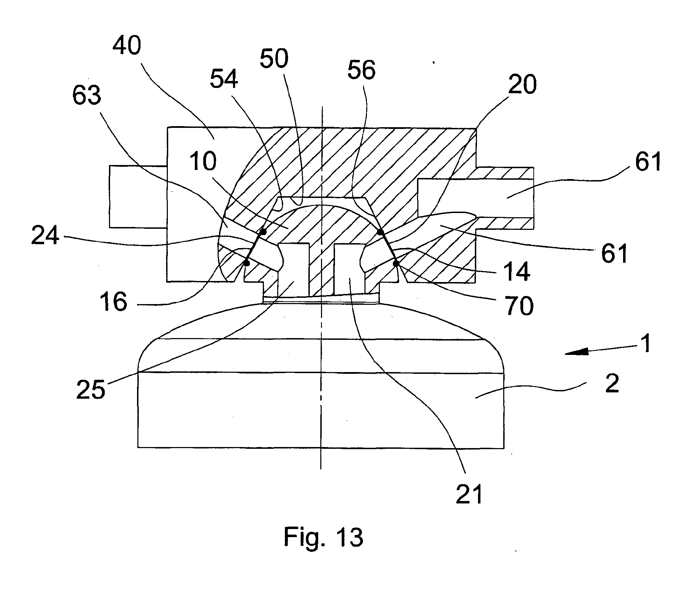

In der Fig. 13 ist der Anschlusskopf 10 gemäß Fig. 12 in eine Aufnahme 50 mit ebeneren Innenflächenabschnitten 54 und 56 eingesteckt. Die beiden ringförmigen auf der Halbkugel angeordneten ersten und zweiten Außenflächenabschnitte 14 und 16 liegen auf diesen ebenen Innenflächenabschnitte 54 und 56 an. Die Kanäle 61, 63 sowie die Endabschnitte der Kanäle 21, 25 sind in dieser Ausführungsform schräg angeordnet.

In der Figur 14 ist eine weitere Ausführungsform eines Anschlusselementes 40 dargestellt. Innerhalb des Anschlusselementes 40 ist ein Auswerfer 80 um eine horizontale Schwenkachse 81 schwenkbar gelagert. Durch Betätigen des Griffabschnittes 82 wird das hammerförmige Betätigungsende 83 nach unten bewegt, so dass eine (nicht dargestellte) Kartusche mit ihrem Anschlusskopf 10 nach unten aus der Aufnahme 50 herausgedrückt werden kann. Die Innenfläche der Aufnahme 50 besitzt außer den Innenflächenabschnitten 54, 56 eine Seitenfläche 58, an der ein Steg 47 als Führungsmittel angeordnet ist (s. auch Fig. 7).

### Bezugszeichenliste

- 1: Kartusche
- 2: Behälter
- 3: Längsachse
- 6: Zwischenraum

- 10: Anschlusskopf

- 12: Stirnfläche
- 13: freies Ende
- 14,14a,b: erster Außenflächenabschnitt
- 15a: Ausnehmung
- 15b: Steg
- 16,16a,b: zweiter Außenflächenabschnitt
- 17: Führungsmittel
- 18: Seitenfläche
- 19: Seitenfläche

- 20: erste Eintrittsöffnung
- 21: erster Eintrittskanal
- 22: zweite Eintrittsöffnung
- 24: Austrittsöffnung
- 25: Austrittskanal

- 40: Anschlusselement
- 42: Einlaufstutzen
- 44: Auslaufstutzen
- 46: Überwurfring
- 47: Führungsmittel
- 50: Aufnahme
- 52: Stirnfläche
- 54,54a,b: erster Innenflächenabschnitt
- 56,56a,b: zweiter Innenflächenabschnitt
- 58: Seitenfläche

- 60: Zuflussöffnung
- 61: Zuflusskanal
- 62: Abflussöffnung
- 63: Abflusskanal

- 70: Dichtelement

- 80: Auswerfer
- 81: Schwenkachse
- 82: Griffabschnitt
- 83: Betätigungsende

## Patentansprüche

1. Vorrichtung zur Behandlung von Wasser, insbesondere Filtervorrichtung,
mit einer Kartusche (1), die einen Behälter (2) zur Aufnahme von Behandlungsmittel für Wasser, insbesondere zur Aufnahme von Filtermittel, und einen auf dem Behälter (2) angeordneten Anschlusskopf (10) aufweist, der an seiner Außenfläche mindestens eine Eintrittsöffnung (20, 22) und mindestens eine Austrittsöffnung (24) aufweist, und
mit einem Anschlusselement (40), das eine Aufnahme (50) für den Anschlusskopf (10) mit mindestens einer Zuflussöffnung (60) und mindestens einer Abflussöffnung (62) aufweist, die an die Eintritts- und Austrittsöffnungen (20, 22, 24) des Anschlusskopfes (10) mittels Dichtelementen abgedichtet angeschlossen sind,
**dadurch gekennzeichnet,**
**dass** sich der Anschlusskopf (10) zu seinem freien Ende (13) hin verjüngt, wobei die Außenfläche mindestens einen zur Längsachse (3) der Kartusche (1) geneigten oder gekrümmten ersten Außenflächenabschnitt (14, 14a,b) und einen dem ersten Außenflächenabschnitt (14, 14a,b) gegenüberliegenden zweiten Außenflächenabschnitt (16, 16a,b) aufweist,
**dass** die Eintritts- und Austrittsöffnungen(20, 22, 24) in dem ersten und/oder dem zweiten Außenflächenabschnitt (14, 14a,b, 16, 16a,b) liegen,
**dass** der Anschlusskopf (10) in axialer Richtung in die Aufnahme (50) eingesteckt ist, wobei die Innenfläche (51) der Aufnahme (50) mindestens zum ersten und zweiten Außenflächenabschnitt (14, 14a,b, 16, 16a,b) komplementäre erste und zweite Innenflächenabschnitte (54, 54a,b, 56, 56a,b) aufweist, und
**dass** die Eintritts- und Austrittsöffnungen (20, 22, 24) und/oder die Zufluss- und Abflussöffnungen (60, 62) jeweils von mindestens einem Dichtelement (70) umgeben sind.

2. Vorrichtung nach Anspruch 1, **dadurch gekennzeichnet, dass** der Anschlusskopf (10) asymmetrisch ist.

3. Vorrichtung nach Anspruch 1 oder 2, **dadurch gekennzeichnet, dass** der erste Außenflächenabschnitt (14, 14a,b) eine ebene Fläche ist, die gegenüber der Längsachse (3) der Kartusche (1) um einen Winkel α mit 0 < α < 90° geneigt ist.

4. Vorrichtung nach Anspruch 1 oder 2, **dadurch gekennzeichnet, dass** der erste Außenflächenabschnitt (14, 14a,b) eine Kegel- oder Kugelfläche, ein Abschnitt einer Kegel- oder Kugelfläche oder eine Freiformfläche ist.

5. Vorrichtung nach einem der Ansprüche 1 bis 4, **dadurch gekennzeichnet, dass** der zweite Außenflächenabschnitt (16, 16a,b) eine ebene Fläche ist, die mit der Längsachse (3) der Kartusche (1) einen Winkel β mit 0 ≤ β < 90° bildet.

6. Vorrichtung nach Anspruch 5, **dadurch gekennzeichnet, dass** α≠β ist.

7. Vorrichtung nach einem der Ansprüche 1 bis 4, **dadurch gekennzeichnet, dass** der zweite Außenflächenabschnitt (16, 16a,b) gekrümmt ist.

8. Vorrichtung nach Anspruch 7, **dadurch gekennzeichnet, dass** die Krümmung des zweiten Außenflächenabschnitts (16, 16a,b) ungleich der Krümmung des ersten Außenflächenabschnitts (14, 14a,b) ist.

9. Vorrichtung nach einem der Ansprüche 1 bis 8, **dadurch gekennzeichnet, dass** der zweite Außenflächenabschnitt (16, 16a,b) eine Kegel- oder Kugelfläche, ein Abschnitt einer Kegel- oder Kugelfläche oder eine Freiformfläche ist.

10. Vorrichtung nach einem der Ansprüche 1 bis 9, **dadurch gekennzeichnet, dass** mindestens der erste und/oder der zweite Außenflächenabschnitt (14, 14a, b, 16, 16a, b) mindestens eine Ausnehmung (15a) aufweist.

11. Vorrichtung nach einem der Ansprüche 1 bis 10, **dadurch gekennzeichnet, dass** der kleinste Innenquerschnitt der Aufnahme (50) kleiner als der kleinste Außenquerschnitt des Anschlusskopfes (10) ist.

12. Vorrichtung nach einem der Ansprüche 1 bis 11, **dadurch gekennzeichnet, dass** der Anschlusskopf (10) mindestens ein Führungsmittel (17) aufweist, das mit einem Führungsmittel (47) der Aufnahme (50) zusammenwirkt.

13. Vorrichtung nach einem der Ansprüche 1 bis 12, **dadurch gekennzeichnet, dass** ein Verriegelungselement (46) vorgesehen ist, das an der Kartusche (1) oder am Anschlusselement (40) angreift.

14. Kartusche mit einem Behälter (2) zur Aufnahme von Behandlungsmittel für Wasser, insbesondere zur Aufnahme von Filtermittel, und mit einem auf dem Behälter (2) angeordneten Anschlusskopf (10) zum Verbinden mit einem Anschlusselement (40), wobei der Anschlusskopf (10) an seiner Außenfläche (11) mindestens eine Eintrittsöffnung (20, 22) und mindestens eine Austrittsöffnung (24) aufweist, **dadurch gekennzeichnet,**
**dass** sich der Anschlusskopf (10) zu seinem freien Ende (13) hin verjüngt, wobei die Außenfläche (11) mindestens einen zur Längsachse (3) der Kartusche (1) geneigten oder gekrümmten ersten Außenflächenabschnitt (14, 14a,b) und einen dem ersten Außenflächenabschnitt (14, 14a,b) gegenüberliegenden zweiten Außenflächenabschnitt (16, 16a,b) aufweist, und
**dass** die Eintritts- und Austrittsöffnungen (20, 22, 24) in dem ersten und/oder dem zweiten Außenflächenabschnitt (14, 14a,b, 16, 16a,b) liegen und jeweils von einem Dichtelement (70) umgeben sind.

## Claims

1. A device for treating water, in particular a filter device,
having a cartridge (1), which comprises a container (2) for accommodating treatment media for water, in particular for accommodating filter media, and which comprises a connector head (10) arranged on the container (2), which connector head has at least one inlet opening (20, 22) and at least one outlet opening (24) at its outer surface, and
having a connector element (40), which comprises a receptacle (50) for the connector head (10) with at least one inflow opening (60) and at least one outflow opening (62), these being connected, sealed by means of sealing elements, to the inlet and outlet openings (20, 22, 24) of the connector head (10),
**characterised in that**
the connector head (10) tapers towards its free end (13), the outer surface comprising at least one first outer surface portion (14, 14a,b) inclined or curved relative to the longitudinal axis (3) of the cartridge (1) and one second outer surface portion (16, 16a,b) opposite the first outer surface portion (14, 14a,b), the inlet and outlet openings (20, 22, 24) lie in the first and/or the second outer surface portion (14, 14a,b, 16, 16a,b),
the connector head (10) is inserted in the axial direction into the receptacle (50), the inner surface (51) of the receptacle (50) comprising at least first and second inner surface portions (54, 54a,b, 56, 56a,b) complementary to the first and second outer surface portions (14, 14a,b, 16, 16a,b), and
the inlet and outlet openings (20, 22, 24) and/or the inflow and outflow openings (60, 62) are each surrounded by at least one sealing element (70).

2. A device according to claim 1, **characterised in that** the connector head (10) is asymmetric.

3. A device according to claim 1 or claim 2, **characterised in that** the first outer surface portion (14, 14a,b) is a planar surface, which is inclined relative to the longitudinal axis (3) of the cartridge (1) by an angle α, with 0 < α < 90°.

4. A device according to claim 1 or claim 2, **characterised in that** the first outer surface portion (14, 14a,b) is a conical or spherical surface, a portion of a conical or spherical surface or a freeform surface.

5. A device according to any one of claims 1 to 4, **characterised in that** the second outer surface portion (16, 16a,b) is a planar surface, which forms an angle β with the longitudinal axis (3) of the cartridge (1), with 0 ≤ β < 90°.

6. A device according to claim 5, **characterised in that** α ≠ β.

7. A device according to any one of claims 1 to 4, **characterised in that** the second outer surface portion (16, 16a,b) is curved.

8. A device according to claim 7, **characterised in that** the curvature of the second outer surface portion (16, 16a,b) is not equal to the curvature of the first outer surface portion (14, 14a,b).

9. A device according to any one of claims 1 to 8, **characterised in that** the second outer surface portion (16, 16a,b) is a conical or spherical surface, a portion of a conical or spherical surface or a freeform surface.

10. A device according to any one of claims 1 to 9, **characterised in that** at least the first and/or the second outer surface portion (14, 14a,b, 16, 16a,b) comprises at least one recess (15a).

11. A device according to any one of claims 1 to 10, **characterised in that** the smallest internal cross-section of the receptacle (50) is smaller than the smallest external cross-section of the connector head (10) .

12. A device according to any one of claims 1 to 11, **characterised in that** the connector head (10) comprises at least one guide means (17), which interacts with a guide means (47) in the receptacle (50) .

13. A device according to any one of claims 1 to 12, **characterised in that** a locking element (46) is provided, which acts on the cartridge (1) or on the connector element (40).

14. A cartridge having a container (2) for accommodating treatment media for water, in particular for accommodating filter media, and having a connector head (10) arranged on the container (2) for connection with a connector element (40), the connector head (10) comprising at least one inlet opening (20, 22) and at least one outlet opening (24) at its outer surface (11), **characterised in that**,
the connector head (10) tapers towards its free end (13), the outer surface (11) comprising at least one first outer surface portion (14, 14a,b) inclined or curved relative to the longitudinal axis (3) of the cartridge (1) and one second outer surface portion (16, 16a,b) opposite the first outer surface portion (14, 14a,b), and
the inlet and outlet openings (20, 22, 24) lie in the first and/or the second outer surface portion (14, 14a,b, 16, 16a,b) and are each surrounded by a sealing element (70).

## Revendications

1. Dispositif pour le traitement de l'eau, en particulier dispositif de filtration, comportant
une cartouche (1), qui comprend un récipient (2) destiné à loger un agent de traitement de l'eau, en particulier à loger un moyen de filtration, et une tête de raccordement (10), disposée sur le récipient (2), tête de raccordement qui, sur sa surface extérieure, comprend au moins un orifice d'entrée (20, 22) et au moins un orifice de sortie (24), et
un élément de raccordement (40), qui présente un logement (50) pour la tête de raccordement (10), avec au moins un orifice d'admission (60) et au moins un orifice d'évacuation (62), qui sont raccordés, d'une manière étanche grâce à des éléments d'étanchéité, aux orifices d'entrée et de sortie (20, 22, 24) de la tête de raccordement (10),
**caractérisé en ce que**
la tête de raccordement (10) se rétrécit vers son extrémité libre (13), la surface extérieure présentant au moins un premier segment de surface extérieure (14, 14a,b), incurvé ou incliné vers l'axe longitudinal (3) de la cartouche (1), et un deuxième segment de surface extérieure (16, 16a,b), opposé au premier segment de surface extérieure (14, 14a,b),
les orifices d'entrée et de sortie (20, 22, 24) se trouvent dans le premier et/ou dans le deuxième segments de surface extérieure (14, 14a,b, 16, 16a,b),
la tête de raccordement (10) est, dans la direction axiale, enfichée dans le logement (50), la surface intérieure (51) du logement (50) présentant au moins des premiers et des deuxièmes segments de surface intérieure (54, 54a,b, 56, 56a,b) complémentaires du premier et du deuxième segments de surface extérieure (14, 14a,b, 16, 16a,b), et
les orifices d'entrée et de sortie (20, 22, 24) et/ou les orifices d'admission et d'évacuation (60, 62) sont chacun entourés d'au moins un élément d'étanchéité (70).

2. Dispositif selon la revendication 1, **caractérisé en ce que** la tête de raccordement (10) est asymétrique.

3. Dispositif selon la revendication 1 ou 2, **caractérisé en ce que** le premier segment de surface extérieure (14, 14a,b) est une surface plane, qui est inclinée d'un angle α tel que 0 < α < 90° par rapport à l'axe longitudinal (3) de la cartouche (1).

4. Dispositif selon la revendication 1 ou 2, **caractérisé en ce que** le premier segment de surface extérieure (14, 14a,b) est une surface conique ou sphérique, un segment de surface conique ou sphérique, ou une surface en forme libre.

5. Dispositif selon l'une des revendications 1 à 4, **caractérisé en ce que** le deuxième segment de surface extérieure (16, 16a,b) est une surface plane, qui avec l'axe longitudinal (3) de la cartouche (1) fait un angle β tel que 0 ≤ β < 90°.

6. Dispositif selon la revendication 5, **caractérisé en ce que** α ≠ β.

7. Dispositif selon l'une des revendications 1 à 4, **caractérisé en ce que** le deuxième segment de surface extérieure (16, 16a,b) est incurvé.

8. Dispositif selon la revendication 7, **caractérisé en ce que** la courbure du deuxième segment de surface extérieure (16, 16a,b) est différente de la courbure du premier segment de surface extérieure (14, 14a,b).

9. Dispositif selon l'une des revendications 1 à 8, **caractérisé en ce que** le deuxième segment de surface extérieure (16, 16a,b) est une surface conique ou sphérique, un segment d'une surface conique ou sphérique, ou une surface en forme libre.

10. Dispositif selon l'une des revendications 1 à 9, **caractérisé en ce qu'**au moins le premier et/ou le deuxième segments de surface extérieure (14, 14a,b, 16, 16a,b) présente au moins un évidement (15a).

11. Dispositif selon l'une des revendications 1 à 10, **caractérisé en ce que** la section transversale intérieure la plus petite de l'évidement (50) est inférieure à la section transversale extérieure la plus petite de la tête de raccordement (10).

12. Dispositif selon l'une des revendications 1 à 11, **caractérisé en ce que** la tête de raccordement (10) présente au moins un moyen de guidage (17), qui coopère avec un moyen de guidage (47) de l'évidement (50).

13. Dispositif selon l'une des revendications 1 à 12, **caractérisé en ce qu'**un élément de verrouillage (46) est prévu, qui entre en prise avec la cartouche (1) ou avec l'élément de raccordement (40).

14. Cartouche comportant un récipient (2) destiné à loger un moyen de traitement de l'eau, en particulier à loger un moyen de filtration, ainsi qu'une tête de raccordement (10), disposée sur le récipient (2), pour permettre une liaison avec un élément de raccordement (40), la tête de raccordement (10) présentant sur sa surface extérieure (11) au moins un orifice d'entrée (20, 22) et au moins un orifice de sortie (24), **caractérisée en ce que**
la tête de raccordement (10) se rétrécit vers son extrémité libre (13), la surface extérieure (11) présentant au moins un premier segment de surface extérieure (14, 14a,b), incurvé ou incliné vers l'axe longitudinal (3) de la cartouche (1), et un deuxième segment de surface extérieure (16, 16a,b), opposé au premier segment de surface extérieure (14, 14a,b), et
les orifices d'entrée et de sortie (20, 22, 24) se trouvent dans le premier et/ou dans le deuxième segments de surface extérieure (14, 14,ab, 16, 16a,b), et sont chacun entourés d'un élément d'étanchéité (70).
